(19) Europäisches Patentamt
European Patent Office
Office européen des brevets

(11) **EP 3 864 433 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **19786971.2**

(22) Anmeldetag: **11.10.2019**

(51) Internationale Patentklassifikation (IPC):
*G01S 7/497* (2006.01)   *G01S 7/481* (2006.01)
*G01S 17/10* (2020.01)   *G01S 17/42* (2006.01)
*G01S 17/87* (2020.01)

(52) Gemeinsame Patentklassifikation (CPC):
**G01S 7/497; G01S 17/10; G01S 17/42;**
**G01S 17/87;** G01S 7/4817; G01S 7/4818

(86) Internationale Anmeldenummer:
**PCT/EP2019/077665**

(87) Internationale Veröffentlichungsnummer:
**WO 2020/074735 (16.04.2020 Gazette 2020/16)**

(54) **OPTISCHER SENSOR NACH DEM LAUFZEITPRINZIP ZUM NACHWEIS VON OBJEKTEN IN EINEM ÜBERWACHUNGSBEREICH**

OPTICAL SENSOR ACCORDING TO THE TIME-OF-FLIGHT PRINCIPLE FOR DETECTING OBJECTS IN A MONITORED REGION

CAPTEUR OPTIQUE SELON LE PRINCIPE DU TEMPS DE PROPAGATION POUR DÉTECTER DES OBJETS DANS UNE ZONE DE CONTRÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2018 DE 102018125253**

(43) Veröffentlichungstag der Anmeldung:
**18.08.2021 Patentblatt 2021/33**

(73) Patentinhaber: **Pepperl+Fuchs SE**
**68307 Mannheim (DE)**

(72) Erfinder:
• **LOHMANN, Lutz**
**12277 Berlin (DE)**
• **WEBER, Hinrik**
**12277 Berlin (DE)**

(74) Vertreter: **Schiffer, Axel Martin**
**Rundfunkplatz 2**
**80335 München (DE)**

(56) Entgegenhaltungen:
EP-A2- 0 066 888      DE-B3-102012 223 689
US-A1- 2007 076 189      US-A1- 2012 013 888

**Beschreibung**

Die vorliegende Erfindung betrifft einen optischen Sensor nach dem Laufzeitprinzip zum Nachweis von Objekten in einem Überwachungsbereich.

Ein gattungsgemäßer optischer Sensor ist beispielsweise bekannt aus DE 10 2014 115 260 B3 und weist folgende Komponenten auf: einen ersten Sender zum Aussenden von ersten Lichtpulsen in den Überwachungsbereich, einen ersten Empfänger zum Nachweisen von von einem ersten nachzuweisenden Objekt im Überwachungsbereich zurückgestrahlten ersten Lichtpulsen, einen zweiten Sender zum Aussenden von zweiten Lichtpulsen in den Überwachungsbereich, einen zweiten Empfänger zum Nachweisen von von dem ersten Objekt oder einem weiteren Objekt im Überwachungsbereich zurückgestrahlten zweiten Lichtpulsen, mindestens eine Steuer- und Auswerteeinheit, die eingerichtet ist zum Ansteuern des ersten Senders und zum Auswerten der von dem ersten Empfänger nachgewiesenen ersten Lichtpulse und zum Ansteuern des zweiten Senders und zum Auswerten der von dem zweiten Empfänger nachgewiesenen zweiten Lichtpulse.

Grundsätzlich bekannt sind auch Sicherheitsscanner, mit welchen des Sicherheitslevel PLd (performance level D) verwirklicht wird. Das Sicherheitskonzept basiert dabei im Wesentlichen auf einem einkanaligen Messsystem, welches anhand von internen Referenzstrecken getestet wird. Die Schutzfeldwinkel sind häufig wegen des internen Referenzelements kleiner als 360 Grad und häufig sogar kleiner als 270 Grad. Solche einkanaligen Sicherheitsscanner sind nicht für Anwendungen geeignet, bei denen das Sicherheitslevel PLe gefordert wird. Wegen des begrenzten Schutzfeldwinkels sind diese Sicherheitsscanner auch nicht gleichzeitig zum Navigieren geeignet.

Weitere optische Sensoren, bei denen Maßnahmen zur Steigerung der Sicherheit getroffen wurden, sind bekannt aus DE 20 2012 103 344 U1 und DE 20 2012 010 014 U1.

Beispielsweise ist in EP 2 927 711 B1 ein Laserscanner mit einem rotierenden Testlichtsender und einem internen Referenzsystem beschrieben. Mit dem Testlichtsender kann ein Empfänger getestet werden, wobei ein Lichtweg vom Testlichtsender zum Empfänger komplett im Inneren des Laserscanners verläuft.

Ein gattungsgemäßer Sensor für Einsatzzwecke im Bereich der Verkehrsüberwachung ist außerdem beschrieben in US-5,793,491.

Optische Sensoren nach dem Laufzeitprinzip, bei denen jeweils zwei Sender-Empfänger-Paare zum Einsatz kommen, zwischen denen kreuzweise eine optische Referenzstrecke gebildet ist, sind beschrieben in EP66888A2, DE102012223689B3 und US2007/076189A1.

Als eine Aufgabe der vorliegenden Erfindung kann angesehen werden, einen optischen Sensor der oben angegebenen Art bereitzustellen, bei dem die Messungen und die Testungen besonders effektiv durchgeführt werden können.

Diese Aufgabe wird durch den optischen Sensor mit den Merkmalen des Anspruchs 1 gelöst.

Vorteilhafte Ausführungsformen des erfindungsgemäßen optischen Sensors werden im Folgenden, insbesondere mit Bezug auf die abhängigen Ansprüche und die Figuren erläutert.

Der optische Sensor der oben angegebenen Art ist erfindungsgemäß dadurch weitergebildet, dass zwischen dem ersten Sender und dem zweiten Empfänger, insbesondere intern, eine erste optische Referenzstrecke gebildet ist, dass zwischen dem zweiten Sender und dem ersten Empfänger, insbesondere intern, eine zweite optische Referenzstrecke gebildet ist, dass die mindestens eine Steuer- und Auswerteeinheit dazu eingerichtet ist, den ersten Sender zum Aussenden von ersten Testlichtpulsen anzusteuern, die auf der ersten optischen Referenzstrecke zum zweiten Empfänger gelangen, und den zweiten Empfänger, insbesondere spätestens, nach einem ersten Zeitversatz aktiv zu stellen, wobei der erste Zeitversatz einer Laufzeit der ersten Testlichtpulse über die erste optische Referenzstrecke entspricht, und/oder den zweiten Sender zum Aussenden von zweiten Testlichtpulsen anzusteuern, die auf der zweiten optischen Referenzstrecke zum ersten Empfänger gelangen, und den ersten Empfänger, insbesondere spätestens, nach einem zweiten Zeitversatz aktiv zu stellen, wobei der zweite Zeitversatz einer Laufzeit der zweiten Testlichtpulse über die zweite optische Referenzstrecke entspricht, und die von dem zweiten Empfänger nachgewiesenen ersten Testlichtpulse und/oder die von dem ersten Empfänger nachgewiesenen zweiten Testlichtpulse auszuwerten.

Grundsätzlich kann der zweite Empfänger schon aktiv gestellt werden zum Aussendezeitpunkt der ersten Testlichtpulse (oder schon vorher) und der erste Empfänger kann schon aktiv gestellt werden den Aussendezeitpunkten der zweiten Testlichtpulse (oder schon vorher). Wesentlich ist, dass der zweite Empfänger zu aktiv ist, wenn auf ihm die ersten Testlichtpulse eintreffen, und dass der erste Empfänger aktiv ist, wenn auf ihm die zweiten Testlichtpulse auftreffen.

Als eine Grundidee der vorliegenden Erfindung kann angesehen werden, bei einem Laserscanner mit einem zweikanaligen Aufbau den Sender des ersten Kanals mit dem Empfänger des zweiten Kanals einerseits und den Sender des zweiten Kanals mit dem Empfänger des ersten Kanals andererseits durch eine Referenzstrecke zu koppeln.

Ein erster wesentlicher Vorteil der vorliegenden Erfindung kann darin gesehen werden, dass die vorhandenen Sender und Empfänger jeweils eine Doppelfunktion ausüben, nämlich einerseits Messen und andererseits Testen. Das bedeutet, dass nicht zusätzlich Komponenten vorgehalten werden müssen, die ausschließlich zum Testen dienen. Die vorhandenen Komponenten werden also bei der vorliegenden Erfindung besonders effektiv genutzt.

Bei optischen Sensoren nach dem Laufzeitprinzip werden Lichtpulse in den Überwachungsbereich ausgesendet und von dort befindlichen Objekten in Richtung des optischen Sensors auf einen Empfänger zurückgestrahlt. Aus einer gemessenen Zeitdifferenz zwischen einem Aussendezeitpunkt eines Lichtpulses und dem Empfangszeitpunkt des von einem Objekt im Überwachungsbereich zurückgestrahlten Lichtpulses wird sodann unter Verwendung der Lichtgeschwindigkeit in an sich bekannter Weise die Entfernung des betreffenden Objekts von dem Sensor errechnet.

Als Sender kommen zumeist Halbleiterkomponenten, wie Leuchtdioden und/oder Laserdioden, zum Einsatz, die im sichtbaren Bereich oder im Infrarotbereich emittieren. Als Empfänger werden in der Regel Photodioden oder APDs verwendet. Diese Komponenten und ihre Verwendung sind an sich bekannt.

Als Steuer- und Auswerteeinheit oder Steuer- und Auswerteeinheiten werden zumeist Mikrocontroller, FPGA oder vergleichbare Komponenten verwendet. Grundsätzlich reicht eine Steuer- und Auswerteeinheit aus, die beide Sender und beide Empfänger ansteuert und beide Empfänger ausliest. Es ist aber auch möglich, dass eine erste und eine zweite Steuer- und Auswerteeinheit vorhanden sind, wobei die erste Steuer- und Auswerteeinheit den ersten Sender und den ersten Empfänger ansteuert und den ersten Empfänger ausliest und die zweite Steuer- und Auswerteeinheit den zweiten Sender und den zweiten Empfänger ansteuert und den zweiten Empfänger ausliest.

Für die erste Referenzstrecke und die zweite Referenzstrecke kommt es darauf an, dass durch sie ein definierter optischer Weg und eine definierte optische Transmission zwischen dem ersten Sender und dem zweiten Empfänger einerseits und dem zweiten Sender und dem ersten Empfänger andererseits bereitgestellt wird. Die erste Referenzstrecke und/oder die zweite Referenzstrecke können prinzipiell durch die Luft verlaufen. Bei einer besonders bevorzugten Ausführungsvariante des erfindungsgemäßen optischen Sensors ist die erste Referenzstrecke und/oder die zweite Referenzstrecke durch einen, insbesondere in einem Gehäuse angeordneten, Lichtleiter, insbesondere durch eine optische Faser, gebildet. Die optischen Eigenschaften der Referenzstrecken können so sehr konstant gehalten werden, sodass sie bei den Testmessungen bekannt, d. h. referenzierbar sind und keine Fehlerquellen darstellen können.

Die vom zweiten Empfänger gemessenen ersten Testlichtpulse und/oder die von dem ersten Empfänger gemessenen zweiten Testlichtpulse werden von der Steuer- und Auswerteeinheit oder den jeweiligen Steuer- und Auswerteeinheiten ausgewertet. In Abhängigkeit dieser Auswertungen können bestimmte Signale ausgegeben werden, etwa über Fehlfunktionen oder Degradationen von Sendern und/oder Empfängern.

Grundsätzlich können schon einzelne Messungen von Testlichtpulsen wertvolle Informationen über den Zustand des optischen Sensors, insbesondere den Zustand der Sender und Empfänger, liefern. Besonders vorteilhaft ist darüber hinaus aber die Steuer- und Auswerteeinheit oder sind die Steuer- und Auswerteeinheiten dazu eingerichtet, die Testlichtpulse über mehrere Scanperioden zu ermitteln. Besonders bevorzugt werden die ermittelten oder gemessenen Testlichtpulse über mehrere Scanperioden gemittelt. Dadurch können genauere Informationen über den Zustand der Sender und Empfänger, insbesondere über graduelle und über längere Zeiträume ablaufende Veränderungen, erhalten werden.

Grundsätzlich können der erste und der zweite Zeitversatz größer sein als eine Laufzeit von Lichtpulsen vom ersten oder zweiten Sender zu einem Objekt im Überwachungsbereich und zurück zum ersten oder zweiten Empfänger. Dieses wäre der Fall bei einer optisch vergleichsweise langen Referenzstrecke, die beispielsweise durch eine entsprechend lange Glasfaser verwirklicht sein kann. Besonders bevorzugt ist aber der erste Zeitversatz kleiner ist als eine Laufzeit von Lichtpulsen vom zweiten Sender zu einem Objekt im Überwachungsbereich und zurück zum zweiten Empfänger und/oder der zweite Zeitversatz kleiner ist als eine Laufzeit von Lichtpulsen vom ersten Sender zu einem Objekt im Überwachungsbereich und zurück zum ersten Empfänger. Dieses kann durch eine entsprechend kurze Referenzstrecke, etwa mit einer vergleichsweise kurzen Glasfaser, verwirklicht werden.

Der erfindungsgemäße optische Sensor ermöglicht eine Vielzahl von Betriebsmodi. Beispielsweise kann, wenn ein Testbetrieb klar von dem Messbetrieb getrennt werden soll, bevorzugt sein, dass die Steuer- und Auswerteeinheit dazu eingerichtet ist, den ersten Empfänger, insbesondere für eine bestimmte Zeitdauer, passiv zu stellen, wenn der erste Sender Testlichtpulse aussendet, und/oder den zweiten Empfänger, insbesondere für eine bestimmte Zeitdauer, passiv zu stellen, wenn der zweite Sender Testlichtpulse aussendet. Wenn sichergestellt ist, dass einerseits Lichtpulse aus dem ersten Sender nicht über den Überwachungsbereich und dort vorhandene Objekte auf den zweiten Empfänger und andererseits Lichtpulse aus dem zweiten Sender nicht über den Überwachungsbereich und dort vorhandene Objekte auf den ersten Empfänger gelangen können, können bei diesem Betriebsmodus Beeinflussungen der realen Messungen an einem Objekt im Überwachungsbereich durch Testmessungen praktisch ausgeschlossen werden. Die Zeitdauer, für die der erste Empfänger und oder der zweite Empfänger jeweils passiv zu stellen sind, muss dabei größer sein als typische Laufzeiten von Lichtpulsen von den Sendern zu einem Objekt im Überwachungsbereich und zurück zu den Empfängern.

Die vorhandenen Sender und Empfänger können besonders effektiv genutzt werden bei einem weiteren Betriebsmodus, der sich dadurch auszeichnet, dass die Steuer- und Auswerteeinheit dazu eingerichtet ist, den ersten Empfänger, insbesondere nach einem Zeitversatz und insbesondere für eine bestimmte Zeitdauer, aktiv zu stellen, wenn der erste Sender Lichtpulse oder Testlichtpulse aussendet, und/oder den zweiten Empfänger, insbesondere nach einem Zeitversatz und insbesondere für eine bestimmte Zeitdauer, aktiv zu stellen, wenn der zweite Sender Lichtpulse oder Testlichtpulse aussendet.

Bei diesem Betriebsmodus wird ausgenutzt, dass die Testlichtpulse des ersten und des zweiten Senders qualitativ dieselben Lichtpulse sind wie die Sendelichtpulse und deshalb auch als Sendelichtpulse für die eigentlichen Messungen verwendet werden können.

Die Zeitdauer, für die der zweite Empfänger aktiv gestellt wird, wenn der erste Sender Testlichtpulse aussendet, darf nicht so groß sein, dass Lichtpulse des ersten Senders, die über ein Objekt im Überwachungsbereich auf den zweiten Empfänger gelangen, von diesem nachgewiesen werden. Entsprechend darf die Zeitdauer, für die der erste Empfänger aktiv gestellt wird, wenn der zweite Sender Testlichtpulse aussendet, nicht so groß sein, dass Lichtpulse des zweiten Senders, die über ein typisches Objekt im Überwachungsbereich auf den ersten Empfänger gelangen, von diesem nachgewiesen werden.

Generell versteht sich, dass, wenn hier die Rede ist Aktivstellen oder Passivstellen der Empfänger, dass dieses zwar verwirklicht werden kann durch ein regelrechtes Ein- oder Abschalten der jeweiligen Empfänger. Grundsätzlich muss der Empfänger aber nicht abgeschaltet werden, sondern es können auch in den jeweiligen Zeitintervallen, wo der Empfänger passiv zu stellen ist, die Messergebnisse von der Steuer- und Auswerteeinheit ignoriert werden. Hier sind Zwischenvarianten möglich.

Besonders zweckmäßig ist die Steuer- und Auswerteeinheit dazu eingerichtet, den ersten Sender und den zweiten Sender mit derselben Frequenz zum Aussenden von Testlichtpulsen anzusteuern und den ersten Sender und den zweiten Sender zeitversetzt, insbesondere in jeweils gleichen Zeitabständen, zum Aussenden von Testlichtpulsen anzusteuern. Die Testinformationen werden somit für die getesteten Komponenten mit derselben Frequenz erhalten und die Qualität der Testung ist für alle getesteten Komponenten dieselbe.

Der erfindungsgemäße optische Sensor kann grundsätzlich ein statischer optischer Sensor sein. Die Vorteile des erfindungsgemäßen optischen Sensors kommen aber in besonderer Weise zum Tragen, wenn der erfindungsgemäße optische Sensor als 2D-Scanner gebildet ist.

Bei bevorzugten Ausgestaltungen des erfindungsgemäßen optischen Sensors als 2D-Scanner sind der erste Sender, der erste Empfänger, der zweite Sender und der zweite Empfänger auf einem Rotor des 2D-Scanners angeordnet und die optischen Achsen des ersten Senders, des ersten Empfängers, des zweiten Senders und des zweiten Empfängers sind quer, insbesondere senkrecht, zu einer Drehachse des Rotors ausgerichtet.

Zweckmäßig sind dabei die optischen Achsen des ersten Senders und des ersten Empfängers bezogen auf die Drehachse des Rotors in einer ersten Azimutalrichtung ausgerichtet und die optischen Achsen des zweiten Senders und des zweiten Empfängers sind bezogen auf die Drehachse des Rotors in einer zweiten Azimutalrichtung ausgerichtet.

Grundsätzlich können die optischen Achsen des ersten Senders und des ersten Empfängers einerseits und des zweiten Senders und des zweiten Empfängers andererseits beliebig relativ zueinander positioniert werden.

Bei einer besonders bevorzugten Variante ist die erste Azimutalrichtung entgegengesetzt zur zweiten Azimutalrichtung. Dabei ist in der Regel ausgeschlossen, dass Sendelichtpulse des ersten Senders über den Überwachungsbereich auf den zweiten Empfänger und Sendelichtpulse des zweiten Senders über den Überwachungsbereich auf den ersten Empfänger gelangen können.

Es kann auch bevorzugt sein, dass die erste Azimutalrichtung gleich ist wie die zweite Azimutalrichtung und dass der erste Sender, der erste Empfänger, der zweite Sender und der zweite Empfänger auf dem Rotor in einer Richtung der Drehachse des Rotors voneinander beabstandet angeordnet sind.

Wenn der erste Sender relativ zum zweiten Empfänger so positioniert ist, dass Sendelichtpulse des ersten Senders über den Überwachungsbereich und dort befindliche Objekte auf den zweiten Empfänger gelangen können, muss dafür Sorge getragen werden, dass in den fraglichen Zeitintervallen der zweite Empfänger von der Steuer- und Auswerteeinheit passiv gestellt ist. Ebenso muss, wenn der zweite Sender relativ zu dem ersten Empfänger so positioniert ist, dass Sendelichtpulse des zweiten Senders über Objekte im Überwachungsbereich auf den ersten Empfänger gelangen können, der erste Empfänger in den Zeitintervallen, wo Lichtpulse des zweiten Senders über Objekte im Überwachungsbereich auf ihn eintreffen können, von der Steuer- und Auswerteeinheit passiv gestellt sein.

Um bei einer solchen Anordnung einen möglichst identischen Auftreffpunkt der Sendelichtpulse des ersten Senders einerseits und des zweiten Senders andererseits auf einem Objekt im Überwachungsbereich, insbesondere in einem Normabstand, zu erreichen, kann die optische Achse des ersten Senders relativ zu einer optischen Achse des zweiten Senders verkippt sein.

Grundsätzlich ist auch möglich, dass zwei oder auch vier weitere Paare von Sendern und Empfängern vorhanden sind, die ebenfalls auf dem Rotor des 2D-Scanners angeordnet sind. Die Paare von Sendern und Empfängern können auf dem Rotor in äquidistanten Winkeln zueinander angeordnet sein. Beispielsweise kann es zweckmäßig sein, vier Sender und vier Empfänger vorzusehen, wobei jeweils ein Sender und ein Empfänger ein Paar bilden und jeweils zueinander parallele optische Achsen aufweisen. Diese vier Paare können vorteilhaft so auf einem Rotor montiert werden, dass die optischen Achsen jeweils um 90 Grad zueinander versetzt sind.

Weitere Vorteile und Merkmale der vorliegenden Erfindung werden im Folgenden mit Bezug auf die beigefügten Figuren erläutert. Darin zeigen:

Figur 1: einen optischen Sensor aus dem Stand der Technik;

Figur 2: ein Ausführungsbeispiel eines erfindungsgemäßen optischen Sensors;

Figur 3: eine schematische Ansicht zur Erläuterung der Referenzstrecke bei einem erfindungsgemäßen optischen Sensor;

Figur 4: ein Diagramm zur Erläuterung eines ersten Betriebsmodus eines erfindungsgemäßen optischen Sensors;

Figur 5: ein Diagramm zur Erläuterung eines zweiten Betriebsmodus eines erfindungsgemäßen optischen Sensors; und

Figur 6: eine schematische Ansicht zur Erläuterung der Begriffe der Drehachse eines Rotors und der Azimutalrichtung.

Gleiche und gleichwirkende Bestandteile sind in den Figuren in der Regel mit denselben Bezugszeichen gekennzeichnet.

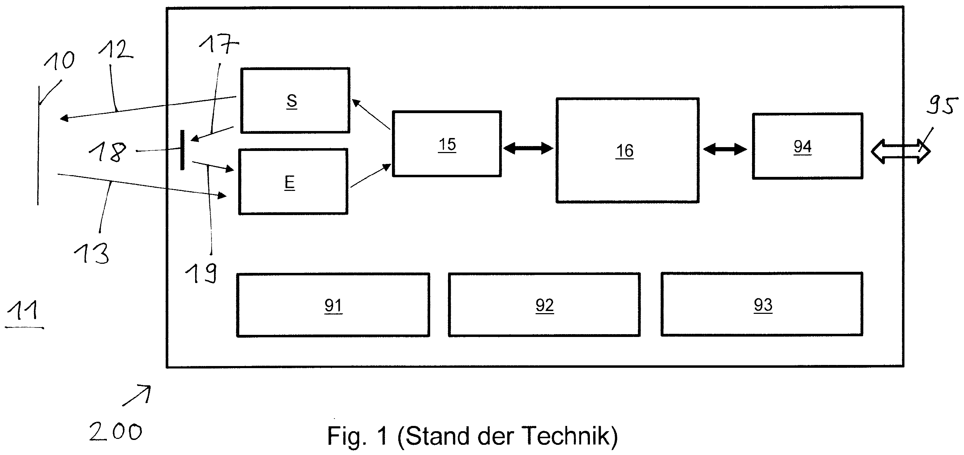

Ein optischer Sensor 200 nach dem Stand der Technik wird mit Bezug auf Figur 1 erläutert. Der optische Sensor 200 weist als wesentliche Komponenten einen Sender S, einen Empfänger E, einen Messkern 15, eine durch einen Messcontroller 16 gebildete Steuer- und Auswerteeinheit und eine Schnittstelle 94, 95 auf.

Über die Schnittstelle 94, 95 kann der Sensor 200 Daten beispielsweise über ein Bussystem versenden oder kommunizieren.

Der Sensor 200 ist ein Sensor nach dem Laufzeitprinzip und arbeitet im Wesentlichen wie folgt: Der Sender S sendet Lichtpulse 12 in den Überwachungsbereich 11 aus und von einem im Überwachungsbereich 11 befindlichen Objekt 10 werden diese Lichtpulse zurückgestrahlt. Diese zurückgestrahlten Lichtpulse 13 werden vom Empfänger E nachgewiesen. Die Zeitdifferenz zwischen einem Aussendezeitpunkt eines Lichtpulses 12 und dem Zeitpunkt, zu dem der zurückgestrahlte Lichtpuls 13 vom Empfänger E nachgewiesen wird, wird gemessen. Der Zusammenhang:

$$d = \text{Zeitdifferenz} * \text{Lichtgeschwindigkeit} / 2$$

liefert den Abstand d des Objekts 10 von dem optischen Sensor 200.

Um Informationen über die für die Messung verwendeten Komponenten Sender S und Empfänger E zu erhalten, ist bei dem optischen Sensor 200 in Figur 1 eine interne Teststrecke mit einem Testobjekt vorhanden. Zum Testen sendet der Sender S in einem Testbetrieb Testlichtpulse 17 aus. Diese werden von dem Testobjekt 18 zurückgestrahlt. Die zurückgestrahlten Testlichtpulse 19 werden sodann vom Empfänger E nachgewiesen und im Anschluss über den Messkern 15 von dem Messcontroller 16 ausgewertet. Wenn die nachgewiesenen Testlichtpulse 19 nicht die erwarteten Eigenschaften aufweisen, können bestimmte Signale, beispielsweise Fehlersignale, ausgegeben oder bestimmte Aktionen, beispielsweise Abschalten des Sensors, ausgelöst werden.

Als weitere Komponenten sind bei dem optischen Sensor 200 ein Modul 91 zur Überwachung einer Frontscheibe, ein Winkelgeber 92 für einen Rotor (wenn der Sensor 200 ein 2D-Scanner ist) und eine Stromversorgung 93 vorhanden.

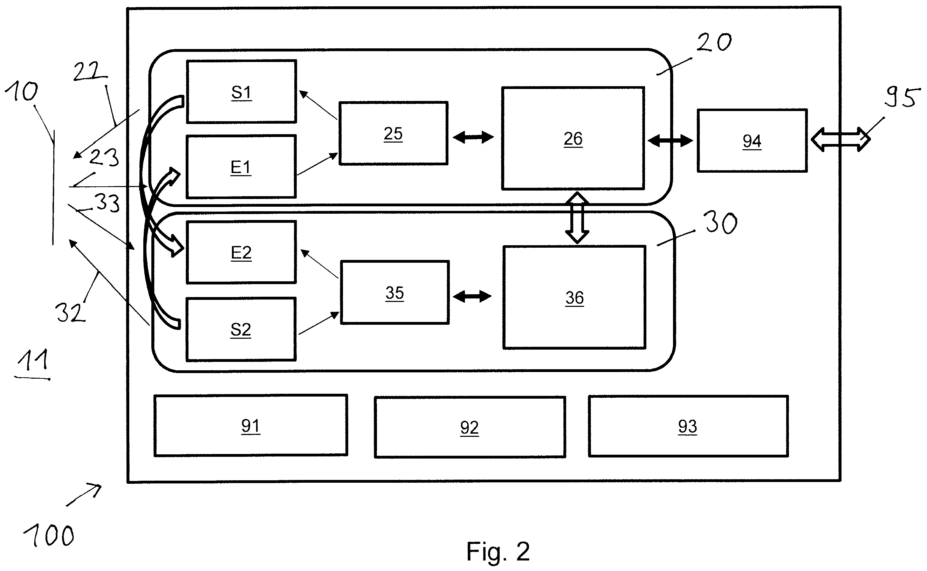

Ausführungsbeispiele von erfindungsgemäßen optischen Sensoren 100 und 300, bei denen es sich insbesondere um 2D-Scanner handeln kann, werden im Zusammenhang mit den Figuren 2 bis 5 beschrieben. Die optischen Sensoren 100 und 300 sind Sensoren nach dem Laufzeitprinzip zum Nachweis von Objekten in einem Überwachungsbereich 11. Der optische Sensor 100 weist als wesentliche Komponenten zunächst einen ersten Sender S1, einen ersten Empfänger E1, einen zweiten Sender S2 und einen zweiten Empfänger E2 auf. Der erste Sender S1 dient zunächst zum Aussenden von ersten Lichtpulsen 22 in den Überwachungsbereich 11. Der erste Empfänger E1 dient zunächst zum Nachweisen von Lichtpulsen 23, die von einem nachzuweisenden Objekt 10 im Überwachungsbereich 11 zurückgestrahlt werden. Der zweite Sender S2 dient zunächst zum Aussenden von zweiten Lichtpulsen 32 in den Überwachungsbereich 11. Der zweite Empfänger E2 dient zunächst zum Nachweisen von Lichtpulsen 33, die von dem Objekt 10 zurückgestrahlt werden.

Zum Ansteuern des ersten Senders S1 und Auslesen des ersten Empfängers E1 ist ein erster Messkern 25 und ein erster Messcontroller 26 vorhanden. Durch den ersten Sender S1, den ersten Empfänger E1, den ersten Messkern 25 und den ersten Messcontroller 26 wird ein erster Kanal 20 gebildet.

Zum Ansteuern des zweiten Senders S2 und Auslesen des zweiten Empfängers E2 sind ein zweiter Messkern 35 und ein zweiter Messcontroller 36 vorhanden. Durch den zweiten Sender S2, den zweiten Empfänger E2, den zweiten Messkern 35 und den zweiten Messcontroller 36 wird ein zweiter Kanal 30 gebildet.

Der erste Messcontroller 26 und der zweite Messcontroller 36 können grundsätzlich durch ein und denselben Mikrocontroller gebildet sein. Der erste Messcontroller 26 und der zweite Messcontroller 36 bilden gemeinsam eine erfindungsgemäß vorhandene Steuer- und Auswerteeinheit 26, 36, die eingerichtet ist zum Ansteuern des ersten Senders S1 und zum Auswerten der von dem ersten Empfänger E1 nachgewiesenen ersten Lichtpulse 23 und zum Ansteuern des zweiten Senders S2 und zum Auswerten der von dem zweiten Empfänger E2 nachgewiesenen zweiten Lichtpulse 33.

Die Steuer- und Auswerteeinheit 26, 36 kann über eine Schnittstelle 94, 95 in an sich bekannter Weise Daten, beispielsweise über ein Bussystem, empfangen und versenden.

Bei dem in Figur 2 dargestellten Ausführungsbeispiel weisen die optischen Achsen des ersten Senders S1, des ersten Empfängers E1, des zweiten Senders S2 und des zweiten Empfängers E2 in dieselbe Richtung.

Bei dem optischen Sensor 100 ist außerdem, was in Figur 2 nicht dargestellt ist, erfindungsgemäß zwischen dem ersten Sender S1 und dem zweiten Empfänger E2, beispielsweise und bevorzugt intern, eine erste optische Referenzstrecke gebildet und zwischen dem zweiten Sender S2 und dem ersten Empfänger E1, beispielsweise und bevorzugt intern, eine zweite optische Referenzstrecke gebildet.

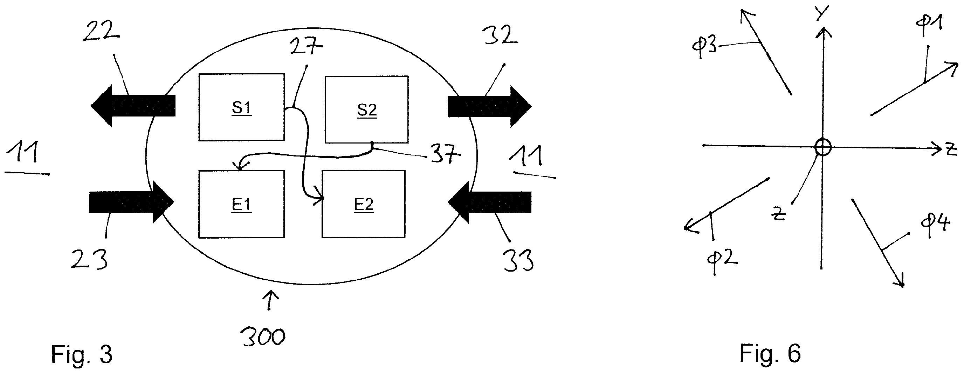

Diese Referenzstrecken können bei dem Ausführungsbeispiel der Figur 2 beispielsweise durch optische Fasern zwischen dem ersten Sender S1 und dem zweiten Empfänger E2 einerseits und dem zweiten Sender S2 und dem ersten Empfänger E1 andererseits verwirklicht sein, wie dieses in Figur 3 für eine Variante eines erfindungsgemäßen optischen Sensors 300 dargestellt ist. Bei dem in Figur 3 schematisch dargestellten optischen Sensor 300 kann es sich ebenfalls um einen 2D-Scanner handeln, bei dem aber, abweichend von dem in Figur 2 gezeigten Ausführungsbeispiel, die optische Achse des ersten Senders S1 und des ersten Empfängers E1 entgegengesetzt ausgerichtet ist zu derjenigen des zweiten Senders S2 und des zweiten Empfängers E2. Ebenfalls schematisch ist in Figur 3 dargestellt, dass zwischen dem ersten Sender S1 und dem zweiten Empfänger E2 eine Referenzstrecke 27 durch eine optische Faser und außerdem zwischen dem zweiten Sender S2 und dem ersten Empfänger E1 eine Referenzstrecke 37 ebenfalls durch eine optische Faser gebildet ist.

Die Steuer- und Auswerteeinheit 26, 36 ist erfindungsgemäß dazu eingerichtet, den ersten Sender S1 zum Aussenden von ersten Testlichtpulsen 42, 46 anzusteuern, die auf der ersten optischen Referenzstrecke 27 zum zweiten Empfänger E2 gelangen, und den zweiten Empfänger E2, insbesondere spätestens, nach einem ersten Zeitversatz aktiv zu stellen, wobei der erste Zeitversatz einer Laufzeit der ersten Testlichtpulse 42, 46 über die erste optische Referenzstrecke 27 entspricht und/oder den zweiten Sender S2 zum Aussenden von zweite Testlichtpulsen 63, 67 anzusteuern, die auf der zweiten optischen Referenzstrecke 37 zum ersten Empfänger E1 gelangen, und den ersten Empfänger E1, insbesondere spätestens, nach einem zweiten Zeitversatz aktiv zu stellen, wobei der zweite Zeitversatz einer Laufzeit der zweiten Testlichtpulse 63, 67 über die zweite optische Referenzstrecke 37 entspricht.

Grundsätzlich kann der zweite Empfänger E2 schon aktiv gestellt werden zu den Aussendezeitpunkten der ersten Testlichtpulse 42, 46 und der erste Empfänger E1 kann schon aktiv gestellt werden zu den Aussendezeitpunkten der zweiten Testlichtpulse 63, 67. Wesentlich ist, dass der zweite Empfänger E2 zu den Zeitpunkten aktiv gestellt ist, zu denen auf ihm die ersten Testlichtpulse 42, 46 eintreffen, und dass der erste Empfänger E1 zu den Zeitpunkten aktiv gestellt ist, zu dem auf ihm die zweiten Testlichtpulse 63, 67 auftreffen.

Die von dem zweiten Empfänger E2 nachgewiesenen ersten Testlichtpulse 42 und/oder die von dem ersten Empfänger E1 nachgewiesenen zweiten Testlichtpulse 63 werden von der Steuer- und Auswerteeinheit 26, 36 ausgewertet. In Abhängigkeit dieser Auswertung können bestimmte Signale, beispielsweise Fehlersignale, über Fehlfunktionen oder Degradationen der Sender oder Empfänger ausgegeben werden oder es können bestimmte Aktionen, beispielsweise ein Abschalten des Sensors, eingeleitet werden.

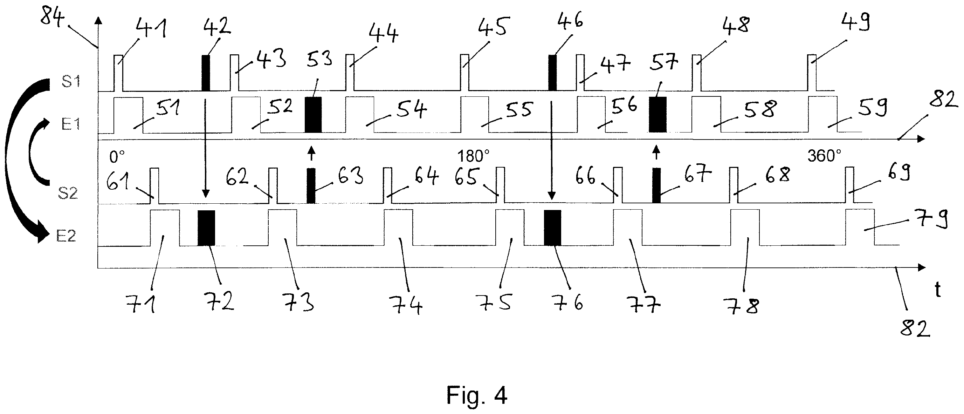

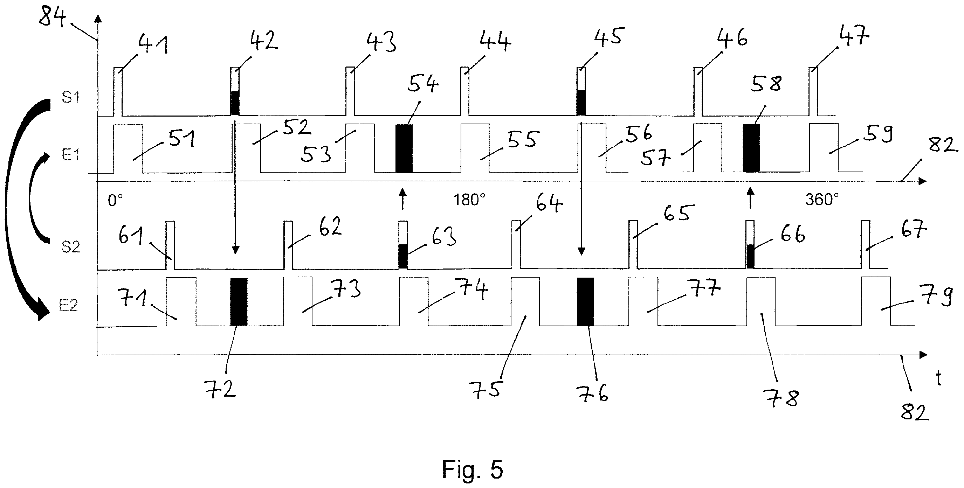

Betriebsmodi für die erfindungsgemäßen optischen Sensoren 100 und 300 werden mit Bezug auf die Figuren 4 und 5 erläutert. Dargestellt sind dort jeweils Ablaufdiagramme, wobei gegenüber einer Zeitachse 82 die jeweiligen Intensitätsverläufe der Sendeleistungen des ersten Senders S1 und des zweiten Senders S2 sowie die von dem ersten Empfänger E1 und dem zweiten Empfänger E2 empfangenen Intensitäten auf der vertikalen Achse 84 dargestellt sind.

Mit dem zeitlichen Ablauf korrespondiert jeweils eine Drehung des 2D-Scanners. Gezeigt ist in Figur 4 und 5 der Verlauf über eine vollständige Drehung von 0 Grad bis 360 Grad eines Rotors des 2D-Scanners

Wesentlich für den in Figur 4 dargestellten Betriebsmodus ist, dass die von den Testphasen von den Messphasen getrennt sind. Beispielsweise sendet der erste Sender S1 erste Sendepulse 41, 44, 45, 48 und 49 aus, die jeweils nach Rückstrahlung durch ein nachzuweisendes Objekt 10 im Überwachungsbereich 11 im ersten Empfänger E1 Empfangspulse 51, 52, 54, 55, 56, 58 beziehungsweise 59 bewirken. Die schematisch dargestellte Verbreiterung der Empfangspulse im Vergleich zu den Sendepulsen wird im Wesentlichen durch die Eigenschaften des zurückstrahlenden Objekts bewirkt.

Entsprechend sendet der zweite Sender S1 zweite Sendepulse 61, 62, 64, 65, 66, 68 und 69 aus, die, nach Rückstrahlung durch ein nachzuweisendes Objekt im Überwachungsbereich 11, im zweiten Empfänger E2 Empfangspulse 71, 73, 74, 75, 77, 78, 79 auslösen. Bei dem Objekt, welches die zweiten Sendepulse zurückgestrahlt, kann es sich entweder um dasselbe nachzuweisende Objekt 10 handeln, welches schon die ersten Sendepulse zurückgestrahlt hat. Dies wäre der Fall bei einer Geometrie wie in Figur 2. Es kann sich aber auch um einen anderes nachzuweisendes Objekt handeln, dann nämlich, wenn die optischen Achse des ersten Senders S1 und des ersten Empfängers E1 verschieden ist von der optischen Achse des zweiten Senders S2 und des zweiten Empfängers E2. Diese Situation liegt bei dem in Figur 3 gezeigten Ausführungsbeispiel vor, wo die Sichtrichtung des ersten Senders S1 und des ersten Empfängers E1 entgegengesetzt ist zur Sichtrichtung des zweiten Senders S2 und des zweiten Empfängers E2.

Getrennt von diesen Messvorgängen erfolgen bei dem in Figur 4 gezeigten Ablauf die Testmessungen. Beispielsweise sendet der erste Sender S1 erste Testlichtpulse 42, 46 aus, die über die erste Referenzstrecke 27 zum zweiten Empfänger E2 gelangen und dort Empfangspulse 72 beziehungsweise 76 bewirken. Entsprechend sendet der zweite Sender S2 zweite Testlichtpulse 63, 67 aus, die über die zweite Referenzstrecke 37 zum ersten Empfänger E1 gelangen und dort Empfangspulse 53 beziehungsweise 57 bewirken. In den Zeitphasen nach den Aussendezeitpunkten der ersten Testlichtpulse 42, 46, in denen aus dem Überwachungsbereich 11 von einem Objekt zurückgestrahlte Testlichtpulse 42, 46 auf dem ersten Empfänger E1 auftreffen würden, wird der erste Empfänger E1 von der Steuer- und Auswerteeinheit 26, 36 passiv gestellt.

Entsprechend wird der zweite Empfänger E2 in den Zeitphasen nach den Aussendezeitpunkten der zweiten Testlichtpulse 63, 67, in denen aus dem Überwachungsbereich 11 zurückgestrahlte Testlichtpulse 63, 67 auf dem zweiten Empfänger E2 auftreffen, von der Steuer- und Auswerteeinheit 26, 36 passiv gestellt.

Weil bei dem in Figur 4 gezeigten Ablauf das Messen einerseits und das Testen andererseits zeitlich völlig getrennt verläuft, können die Messungen und die Testmessungen einander nicht beeinflussen oder verfälschen.

Der wesentliche Unterschied des in Figur 5 gezeigten Ablaufs im Vergleich zu dem der Figur 4 ist, dass einige der von dem ersten Sender S1 ausgesendeten Lichtpulse, nämlich die Lichtpulse 42 und 45, und einige der von dem zweiten Sender S2 ausgesandten Lichtpulse, nämlich die Lichtpulse 63 und 66, jeweils sowohl für Testmessungen als auch für die eigentlichen Entfernungsmessungen dienen. Beispielsweise gelangt ein Teil der Lichtpulse 42, 45 über die erste Referenzstrecke 27 zum zweiten Empfänger E2 und bewirkt dort einen Empfangspuls 72 beziehungsweise 76. Ein weiterer Teil der Lichtpulse 42 und 45 wird in den Überwachungsbereich 11 ausgestrahlt, dort von einem Objekt zurückgestrahlt und gelangt dann auf den ersten Empfänger E1, wo er einen Empfangspuls 52 beziehungsweise 56 bewirkt.

Entsprechend gelangt ein Teil der Lichtpulse 63 und 66 über die zweite Referenzstrecke 37 zum ersten Empfänger E1 und bewirkt dort einen Empfangspuls 54 beziehungsweise 58. Ein weiterer Teil der Lichtpulse 63 und 66 wird in den Überwachungsbereich 11 ausgestrahlt, dort von einem Objekt zurückgestrahlt und gelangt dann auf den zweiten Empfänger E2, wo er einen Empfangspuls 74 beziehungsweise 78 bewirkt.

Der Vorteil des in Figur 5 gezeigten Ablaufs ist, dass man insgesamt mit weniger Lichtpulsen auskommt, weil wenigstens einige der Lichtpulse sowohl zum Messen als auch zum Testen verwendet werden. Die Lebensdauer der verwendeten Lichtsender und damit die Standzeiten der Sensoren können damit gesteigert werden.

Figur 6 dient zur Veranschaulichung der Begriffe der Drehachse eines Rotors bei einem 2D-Scanner und der Azimutalrichtung. Schematisch dargestellt ist ein Koordinatensystem x, y, z, wobei die Drehachse des Rotors kollinear zur z-Achse orientiert ist. Beispielsweise können in einem Ausführungsbeispiel eines erfindungsgemäßen optischen Sensors mit zwei Sendern S1, S2 und zwei Empfängern E1, E2 die optischen Achsen des ersten Senders S1 und des ersten Empfängers E1 in der ersten Azimutalrichtung φ1 und die optischen Achsen des zweiten Senders S2 und des zweiten Empfängers können in der zweiten Azimutalrichtung φ2 ausgerichtet sein; dieses wäre etwa der Fall bei der in Figur 3 gezeigten Variante. Bei einer Ausführungsform mit insgesamt vier Sendern und vier Empfängern könnten die beiden weiteren Paare von Sender und Empfänger in Richtung der Azimutalrichtung φ3 und φ4 ausgerichtet sein. Die Paare von Sender und Empfänger sind dann jeweils in einem Winkelabstand von 90 Grad zueinander positioniert.

Mit der vorliegenden Erfindung wird ein neuartiger optischer Sensor zum Nachweis von Objekten in einem Überwachungsbereich bereitgestellt, bei dem das Testen und Messen besonders effektiv erfolgt. Der optische Sensor kann als zwei 2D-Scanner mit einem Winkelerfassungsbereich von 360 Grad ausgebildet sein. Der erfindungsgemäße optische Sensor kann insbesondere als Sicherheitsscanner für das Schutzlevel PLd zum Einsatz kommen. Besonders vorteilhafte Anwendungen sind für die Navigation, beispielsweise bei Flurförderfahrzeugen, möglich.

Bezugszeichenliste

| | |
|---|---|
| 10 | nachzuweisendes Objekt |
| 11 | Überwachungsbereich |
| 12 | Sendelicht |
| 13 | vom Objekt 10 zurückgestrahltes Licht |
| 15 | Messkern |
| 16 | Messcontroller |
| 17 | Testlicht eines Testlichtpfads |
| 18 | Testobjekt |
| 19 | vom Testobjekt 19 zurückgestrahltes Testlicht |
| 20 | erster Kanal |
| 22 | Sendelicht des Senders S1 |
| 23 | vom Objekt 10 zurückgestrahltes und vom Empfänger E1 nachgewiesenes Licht |
| 25 | Messkern des ersten Kanals |
| 26 | Messcontroller des ersten Kanals |

| 27 | Lichtleiter |
|---|---|
| 30 | zweiter Kanal |
| 32 | Sendelicht des Senders S2 |
| 33 | vom Objekt 10 zurückgestrahltes und vom Empfänger E2 nachgewiesenes Licht |
| 35 | Messkern des zweiten Kanals |
| 36 | Messcontroller des zweiten Kanals |
| 37 | Lichtleiter |
| 41-49 | Sendepulse des Senders S1 |
| 51-59 | Empfangspulse des Empfängers E1 |
| 61-69 | Sendepulse des Senders S2 |
| 71-79 | Empfangspulse des Empfängers E2 |
| 82 | Zeitachse |
| 84 | Intensitätsachse |
| 91 | Fensterüberwachung |
| 92 | Winkelgeber |
| 93 | Stromversorgung |
| 94 | Schnittstelle |
| 95 | bidirektionaler Pfeil |
| 100 | erfindungsgemäßer optischer Sensor |
| 200 | optischer Sensor nach dem Stand der Technik |
| S | Sender |
| E | Empfänger |
| S1 | erster Sender |
| E1 | erster Empfänger |
| S2 | zweiter Sender |
| E2 | zweiter Empfänger |
| z | Drehachse |
| φ1 | Azimutalrichtung |
| φ2 | Azimutalrichtung |
| φ3 | Azimutalrichtung |
| φ4 | Azimutalrichtung |

**Patentansprüche**

1. Optischer Sensor nach dem Laufzeitprinzip zum Nachweis von Objekten in einem Überwachungsbereich,

mit einem ersten Sender (S1) zum Aussenden von ersten Lichtpulsen (22; 41) in den Überwachungsbereich,
mit einem ersten Empfänger (E1) zum Nachweisen von von einem ersten nachzuweisenden Objekt (10) im Überwachungsbereich (11) zurückgestrahlten ersten Lichtpulsen (23; 51),
mit einem zweiten Sender (S2) zum Aussenden von zweiten Lichtpulsen (32; 61) in den Überwachungsbereich (11),
mit einem zweiten Empfänger (E2) zum Nachweisen von von dem ersten Objekt (10) oder einem weiteren Objekt im Überwachungsbereich (11) zurückgestrahlten zweiten Lichtpulsen (33; 71),
mit mindestens einer Steuer- und Auswerteeinheit (26, 36), die eingerichtet ist zum Ansteuern des ersten Senders (S1) und zum Auswerten der von dem ersten Empfänger (E1) nachgewiesenen ersten Lichtpulse (23; 51) und
zum Ansteuern des zweiten Senders (S2) und zum Auswerten der von dem zweiten Empfänger (E2) nachgewiesenen zweiten Lichtpulse (33; 71),
wobei zwischen dem ersten Sender (S1) und dem zweiten Empfänger (E2), insbesondere intern, eine erste optische Referenzstrecke (27) gebildet ist, wobei zwischen dem zweiten Sender (S2) und dem ersten Empfänger (E1), insbesondere intern, eine zweite optische Referenzstrecke (37) gebildet ist,
wobei die mindestens eine Steuer- und Auswerteeinheit (26, 36) dazu eingerichtet ist,

• den ersten Sender (S1) zum Aussenden von ersten Testlichtpulsen (42) anzusteuern, die auf der ersten optischen Referenzstrecke (27) zum zweiten Empfänger (E2) gelangen, und den zweiten Empfänger (E2) nach einem ersten Zeitversatz aktiv zu stellen, wobei der erste Zeitversatz einer Laufzeit der ersten Testlichtpulse (42) über die erste optische Referenzstrecke (27) entspricht und/oder
• den zweiten Sender (S2) zum Aussenden von zweiten Testlichtpulsen (63) anzusteuern, die auf der zweiten optischen Referenzstrecke (37) zum ersten Empfänger (E1) gelangen, und den ersten Empfänger (E1) nach einem zweiten Zeitversatz aktiv zu stellen, wobei der zweite Zeitversatz einer Laufzeit der zweiten Testlichtpulse (63) über die zweite optische Referenzstrecke entspricht, und
• die von dem zweiten Empfänger (E2) nachgewiesenen ersten Testlichtpulse (42) und/oder die von dem ersten Empfänger (E1) nachgewiesenen zweiten Testlichtpulse (63) auszuwerten.

2. Optischer Sensor nach Anspruch 1, **dadurch gekennzeichnet , dass** die erste Referenzstrecke (27) und/oder die zweite Referenzstrecke (37) durch einen, insbesondere in einem Gehäuse angeordneten, Lichtleiter, insbesondere durch eine optische Faser, gebildet ist.

3. Optischer Sensor nach Anspruch 1 oder 2, **dadurch gekennzeichnet, dass** die Steuer- und Auswerteeinheit (26, 36) dazu eingerichtet ist, die gemessenen Testlichtpulse (53, 72; 54, 72) über mehrere Scanperioden zu ermitteln und insbesondere zu mitteln.

4. Optischer Sensor nach einem der Ansprüche 1 bis 3, **dadurch gekennzeichnet,**

**dass** der erste Zeitversatz kleiner ist als eine Laufzeit von Lichtpulsen vom zweiten Sender (S2) zu einem Objekt (10) im Überwachungsbereich (11) und zurück zum zweiten Empfänger (E2) und/oder

der zweite Zeitversatz kleiner ist als eine Laufzeit von Lichtpulsen vom ersten Sender (S1) zu einem Objekt (10) im Überwachungsbereich (11) und zurück zum ersten Empfänger (E1).

5. Optischer Sensor nach einem der Ansprüche 1 bis 4,
**dadurch gekennzeichnet,**

**dass** die Steuer- und Auswerteeinheit (26, 36) dazu eingerichtet ist,
den ersten Empfänger (E1) passiv zu stellen, wenn der erste Sender (S1) Testlichtpulse (42, 46) aussendet und/oder
den zweiten Empfänger (E2) passiv zu stellen, wenn der zweite Sender (S22) Testlichtpulse (63, 67) aussendet.

6. Optischer Sensor nach einem der Ansprüche 1 bis 4,
**dadurch gekennzeichnet,**

**dass** die Steuer- und Auswerteeinheit (26, 36) dazu eingerichtet ist,
den ersten Empfänger (E1) aktiv zu stellen, wenn der erste Sender (S1) Lichtpulse (41, 43) oder Testlichtpulse (42, 45) aussendet, und/oder
den zweiten Empfänger (E2) aktiv zu stellen, wenn der zweite Sender (S22) Lichtpulse (61, 62) oder Testlichtpulse (63, 66) aussendet.

7. Optischer Sensor nach einem der Ansprüche 1 bis 6,
**dadurch gekennzeichnet,**

**dass** die Steuer- und Auswerteeinheit (26, 36) dazu eingerichtet ist,
den ersten Sender (S1) und den zweiten Sender (S2) mit derselben Frequenz zum Aussenden von Testlichtpulsen (42, 63) anzusteuern und
den ersten Sender (S1) und den zweiten Sender (S2) zeitversetzt, insbesondere in jeweils gleichen Zeitabständen, zum Aussenden von Testlichtpulsen (42, 63) anzusteuern.

8. Optischer Sensor nach einem der Ansprüche 1 bis 7, welcher als 2D-Scanner gebildet ist.

9. Optischer Sensor nach Anspruch 8,
**dadurch gekennzeichnet,**

**dass** der erste Sender (S1), der erste Empfänger (E1), der zweite Sender (S2) und der zweite Empfänger (E2) auf einem Rotor des 2D-Scanners angeordnet sind und

**dass** die optischen Achsen des ersten Senders (S1), des ersten Empfängers, des zweiten Senders (S2) und des zweiten Empfängers (E2) quer, insbesondere senkrecht, zu einer Drehachse (z) des Rotors ausgerichtet sind.

10. Optischer Sensor nach Anspruch 8 oder 9,
**dadurch gekennzeichnet,**

**dass** die optischen Achsen des ersten Senders (S1) und des ersten Empfängers (E1) bezogen auf die Drehachse (z) des Rotors in einer ersten Azimutalrichtung (φ1) ausgerichtet sind und
**dass** die optischen Achsen des zweiten Senders (S2) und des zweiten Empfängers (E2) bezogen auf die Drehachse (z) des Rotors in einer zweiten Azimutalrichtung (φ2) ausgerichtet sind.

11. Optischer Sensor nach einem der Ansprüche 8 bis 10,
**dadurch gekennzeichnet,**
**dass** die erste Azimutalrichtung (φ1) der zweiten Azimutalrichtung (φ2) entgegengesetzt ist.

12. Optischer Sensor nach einem der Ansprüche 8 bis 10,
**dadurch gekennzeichnet,**

**dass** die erste Azimutalrichtung (φ1) gleich ist wie die zweite Azimutalrichtung (φ2) und
**dass** der erste Sender (S1), der erste Empfänger (E1), der zweite Sender (S2) und der zweite Empfänger (E2) auf dem Rotor in einer Richtung der Drehachse (z) des Rotors voneinander beabstandet angeordnet sind.

13. Optischer Sensor nach einem der Ansprüche 1 bis 12,
**dadurch gekennzeichnet,**
**dass** die optische Achse des ersten Senders (S1) relativ zu einer optischen Achse des zweiten Senders (S2) zum Erreichen eines identischen Auftreffpunkts der Sendelichtpulse (22,32) auf einem Objekt (10) in einem Normabstand verkippt ist.

14. Optischer Sensor nach einem der Ansprüche 8 bis 13,
**dadurch gekennzeichnet,**
**dass** zwei weitere Paare eines Senders und eines Empfängers vorhanden sind, die ebenfalls auf dem Rotor des 2D-Scanners angeordnet sind.

**Claims**

1. Optical sensor according to the time-of-flight principle for detecting objects in a monitored region, having

a first transmitter (S1) for transmitting first light pulses (22; 41) into the monitored region, a first receiver (E1) for detecting first light pulses (23; 51) radiated back by a first object to be detected (10) in the monitored region (11), a second transmitter (S2) for transmitting second light pulses (32; 61) into the monitored region (11), a second receiver (E2) for detecting second light pulses (33; 71) radiated back by the first object (10) or a further object in the monitored region (11), at least one control and evaluation unit (26, 36), which is designed to control the first transmitter (S1) and to evaluate the first light pulses (23; 51) detected by the first receiver (E1) and to control the second transmitter (S2) and to evaluate the second light pulses (33; 71) detected by the second receiver (E2), wherein between the first transmitter (S1) and the second receiver (E2), in particular internally, a first optical reference path (27) is formed, wherein between the second transmitter (S2) and the first receiver (E1), in particular internally, a second optical reference path (37) is formed, wherein the at least one control and evaluation unit (26, 36) is designed

• to trigger the first transmitter (S1) to transmit first test light pulses (42) which reach the second receiver (E2) on the first optical reference path (27), and to activate the second receiver (E2) after a first time offset, the first time offset corresponding to a time of flight of the first test light pulses (42) over the first optical reference path (27) and / or
• to trigger the second transmitter (S2) to transmit second test light pulses (63) which reach the first receiver (E1) on the second optical reference path (37), and to activate the first receiver (E1) after a second time offset, the second time offset corresponding to a time of flight of the second test light pulses (63) over the second optical reference path, and
• to evaluate the first test light pulses (42) detected by the second receiver (E2) and / or to evaluate the second test light pulses (63) detected by the first receiver (E1).

2. Optical sensor according to claim 1,
**characterised in that**
the first reference path (27) and / or the second reference path (37) is / are formed by a light conductor, in particular by an optical fibre, in particular arranged in a housing.

3. Optical sensor according to claim 1 or 2,
**characterised in that**
the control and evaluation unit (26, 36) is designed to determine, and in particular to average, the measured test light pulses (53, 72; 54, 72) over a plurality of scan periods.

4. Optical sensor according to one of claims 1 to 3,
**characterised in that**

the first time offset is smaller than a time of flight of light pulses from the second transmitter (S2) to an object (10) in the monitored region (11) and back to the second receiver (E2) and / or the second time offset is smaller than a time of flight of light pulses from the first transmitter (S1) to an object (10) in the monitored region (11) and back to the first receiver (E1).

5. Optical sensor according to one of claims 1 to 4,
**characterised in that**

the control and evaluation unit (26, 36) is designed
to deactivate the first receiver (E1) if the first transmitter (S1) transmits test light pulses (42, 46) and / or
to deactivate the second receiver (E2) if the second transmitter (S2) transmits test light pulses (63, 67).

6. Optical sensor according to one of claims 1 to 4,
**characterised in that**

the control and evaluation unit (26, 36) is designed to activate the first receiver (E1) if the first transmitter (S1) transmits light pulses (41, 43) or test light pulses (42, 45), and / or to activate the second receiver (E2) if the second transmitter (S2) transmits light pulses (61, 62) or test light pulses (63, 66).

7. Optical sensor according to one of claims 1 to 6
**characterised in that**

the control and evaluation unit (26, 36) is designed to control the first transmitter (S1) and the second transmitter (S2) with the same frequency for transmitting test light pulses (42, 63) and
to control the first transmitter (S1) and the second transmitter (S2) with time offset, in particular in respectively equal time intervals, for transmitting test light pulses (42, 63).

8. Optical sensor according to one of claims 1 to 7, which is formed as a 2D scanner.

**9.** Optical sensor according to claim 8, **characterised in that**

the first transmitter (S1), the first receiver (E1), the second transmitter (S2) and the second receiver (E2) are arranged on a rotor of the 2D scanner and
the optical axes of the first transmitter (S1), the first receiver, the second transmitter (S2) and the second receiver (E2) are orientated transversely, in particular perpendicularly, relative to an axis of rotation (z) of the rotor.

**10.** Optical sensor according to claim 8 or 9, **characterised in that**
the optical axes of the first transmitter (S1) and the first receiver (E1) are orientated in a first azimuthal direction (φ1) relative to the axis of rotation (z) of the rotor and the optical axes of the second transmitter (S2) and the second receiver (E2) are orientated in a second azimuthal direction (φ2) relative to the axis of rotation (z) of the rotor.

**11.** Optical sensor according to one of claims 8 to 10, **characterised in that**
the first azimuthal direction (φ1) is counter to the second azimuthal direction (φ2).

**12.** Optical sensor according to one of claims 8 to 10, **characterised in that**

the first azimuthal direction (φ1) is the same as the second azimuthal direction (φ2) and
the first transmitter (S1), the first receiver (E1), the second transmitter (S1) and the second receiver (E2) are arranged on the rotor spaced apart from each other in a direction of the axis of rotation (z) of the rotor.

**13.** Optical sensor according to one of claims 1 to 12, **characterised in that**
the optical axis of the first transmitter (S1) is tilted relative to an optical axis of the second transmitter (S2) in order to achieve an identical hit point of the transmitted light pulses (22, 32) on an object (10) at a standard distance.

**14.** Optical sensor according to one of claims 8 to 13, **characterised in that**
two further pairs of a transmitter and a receiver are provided, which are also arranged on the rotor of the 2D scanner.

**Revendications**

**1.** Capteur optique selon le principe du temps de propagation pour la détection d'objets dans une zone de surveillance,

avec un premier émetteur (S1) pour l'émission de premières impulsions lumineuses (22 ; 41) dans la zone de surveillance,
avec un premier récepteur (E1) pour la détection de premières impulsions lumineuses (23 ; 51) renvoyées dans la zone de surveillance (11) par un premier objet (10) à détecter ;
avec un deuxième émetteur (S2) pour l'émission de deuxièmes impulsions lumineuse (32 ; 61) dans la zone de surveillance (11),
avec un deuxième récepteur (E2) pour la détection de deuxièmes impulsions lumineuses (33 ; 71) renvoyées dans la zone de surveillance (11) par le premier objet (10) ou un autre objet,
avec au moins une unité de commande et d'évaluation (26, 36), qui est configurée
pour commander le premier émetteur (S1) et pour évaluer les premières impulsions lumineuses (23 ; 51) détectées par le premier récepteur (E1) et
pour commander le deuxième émetteur (S2) et pour évaluer les deuxièmes impulsions lumineuses (33 ; 71) détectées par le deuxième récepteur (E2),
dans lequel un premier trajet de référence optique (27) est formé, en particulier de manière interne, entre le premier émetteur (S1) et le deuxième récepteur (E2), dans lequel un deuxième trajet de référence optique (37) est formé, en particulier de manière interne, entre le deuxième émetteur (S2) et le premier récepteur (E1),
dans lequel la au moins une unité de commande et d'évaluation (26, 36) est configurée

• pour commander le premier émetteur (S1) pour l'émission de premières impulsions lumineuses d'essai (42), qui parviennent sur le premier trajet de référence optique (27) au deuxième récepteur (E2), et pour régler de manière active le deuxième récepteur (E2) après un premier décalage temporel, dans lequel le premier décalage temporel correspond à un temps de propagation des premières impulsions lumineuses d'essai (42) sur le premier trajet de référence optique (27) et/ou
• pour commander le deuxième émetteur (S2) pour l'émission de deuxièmes impulsions lumineuses d'essai (63), qui parviennent sur le deuxième trajet de référence optique (37) au premier récepteur (E1), et pour régler activement le premier récepteur (E1) après un deuxième décalage temporel, dans lequel le deuxième décalage temporel correspond à un temps de propagation des deuxièmes impulsions lumineuses d'essai (63) sur le deuxième trajet de référence optique, et

• pour évaluer les premières impulsions lumineuses d'essai (42) détectées par le deuxième récepteur (E2) et/ou les deuxièmes impulsions lumineuses d'essai (63) détectées par le premier récepteur (E1).

2. Capteur optique selon la revendication 1, **caractérisé en ce que** le premier trajet de référence (27) et/ou le deuxième trajet de référence (37) est formé par un guide de lumière, en particulier disposé dans un boîtier, en particulier par une fibre optique.

3. Capteur optique selon la revendication 1 ou 2, **caractérisé en ce que** l'unité de commande et d'évaluation (26, 36) est configurée pour déterminer les impulsions lumineuses d'essai (53, 72 ; 54, 72) mesurées sur plusieurs périodes de balayage et en particulier pour en faire la moyenne.

4. Capteur optique selon l'une quelconque des revendications 1 à 3, **caractérisé en ce**

**que** le premier décalage temporel est inférieur à un temps de propagation d'impulsions lumineuses à partir du deuxième émetteur (S2) vers un objet (10) dans la zone de surveillance (11) et à nouveau vers le deuxième récepteur (E2) et/ou

le deuxième décalage temporel est inférieur à un temps de propagation d'impulsions lumineuses à partir du premier émetteur (S1) vers un objet (10) dans la zone de surveillance (11) et à nouveau vers le premier récepteur (E1).

5. Capteur optique selon l'une quelconque des revendications 1 à 4, **caractérisé en ce**

**que** l'unité de commande et d'évaluation (26, 36) est configurée pour régler de manière passive le premier récepteur (E1), lorsque le premier émetteur (S1) émet des impulsions lumineuses d'essai (42, 46) et/ou pour régler de manière passive le deuxième récepteur (E2), lorsque le deuxième émetteur (S22) émet des impulsions lumineuses d'essai (63, 67).

6. Capteur optique selon l'une quelconque des revendications 1 à 4, **caractérisé en ce**

**que** l'unité de commande et d'évaluation (26, 36) est configurée pour régler de manière active le premier récepteur (E1), lorsque le premier émetteur (S1) émet des impulsions lumineuses (41, 43) ou des impulsions lumineuses d'essai (42, 45), et/ou

pour régler de manière active le deuxième récepteur (E2), lorsque le deuxième émetteur (S22) émet des impulsions lumineuses (61, 62) ou des impulsions lumineuses d'essai (63, 66) .

7. Capteur optique selon l'une quelconque des revendications 1 à 6, **caractérisé en ce**

**que** l'unité de commande et d'évaluation (26, 36) est configurée pour commander le premier émetteur (S1) et le deuxième émetteur (S2) avec la même fréquence pour l'émission d'impulsions lumineuses d'essai (42, 63) et pour commander le premier émetteur (S1) et le deuxième émetteur (S2) de manière décalée dans le temps, en particulier par intervalles de temps respectivement identiques, pour l'émission d'impulsions lumineuses d'essai (42, 63).

8. Capteur optique selon l'une quelconque des revendications 1 à 7, lequel est formé en tant que scanner 2D.

9. Capteur optique selon la revendication 8, **caractérisé en ce**

**que** le premier émetteur (S1), le premier récepteur (E1), le deuxième émetteur (S2) et le deuxième récepteur (E2) sont disposés sur un rotor du scanner 2D et **que** les axes optiques du premier émetteur (S1), du premier récepteur, du deuxième émetteur (S2) et du deuxième récepteur (E2) sont orientés transversalement, en particulier perpendiculairement, par rapport à un axe de rotation (z) du rotor.

10. Capteur optique selon la revendication 8 ou 9, **caractérisé en ce**

**que** les axes optiques du premier émetteur (S1) et du premier récepteur (E1) sont orientés dans une première direction azimutale ($\varphi1$) par rapport à l'axe de rotation (z) du rotor et **que** les axes optiques du deuxième émetteur (S2) et du deuxième récepteur (E2) sont orientés dans une deuxième direction azimutale ($\varphi2$) par rapport à l'axe de rotation (z) du rotor.

11. Capteur optique selon l'une quelconque des revendications 8 à 10,
**caractérisé en ce**
**que** la première direction azimutale (φ1) est opposée à la deuxième direction azimutale (φ2).

12. Capteur optique selon l'une quelconque des revendications 8 à 10,
**caractérisé en ce**

> **que** la première direction azimutale (φ1) est identique à la deuxième direction azimutale (φ2) et
> **que** le premier émetteur (S1), le premier récepteur (E1), le deuxième émetteur (S2) et le deuxième récepteur (E2) sont disposés sur le rotor dans une direction de l'axe de rotation (z) du rotor à distance l'un de l'autre.

13. Capteur optique selon l'une quelconque des revendications 1 à 12,
**caractérisé en ce**
**que** l'axe optique du premier émetteur (S1) est amené à basculer par rapport à un axe optique du deuxième émetteur (S2) pour l'atteinte d'un point d'impact identique des impulsions lumineuses d'essai (22, 32) sur un objet (10) dans un écart normal.

14. Capteur optique selon l'une quelconque des revendications 8 à 13,
**caractérisé en ce**
**que** deux autres paires d'un émetteur et d'un récepteur sont présents, qui sont également disposés sur le rotor du scanner 2D.

Fig. 1 (Stand der Technik)

Fig. 2

EP 3 864 433 B1

EP 3 864 433 B1

Fig. 3

Fig. 6

Fig. 4

EP 3 864 433 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014115260 B3
- DE 202012103344 U1
- DE 202012010014 U1
- EP 2927711 B1

- US 5793491 A
- EP 66888 A2
- DE 102012223689 B3
- US 2007076189 A1